# EUROPEAN PATENT APPLICATION

(11) **EP 2 669 147 A1**
(43) Date of publication of application: **04.12.2013**
(21) Application number: 12169675.1
(22) Date of filing: 27.05.2012
(51) Int. Cl.: B62D 21/02, B60P 1/64, B62D 63/06

(54) **An extendable trailer and a combination comprising the trailer for transporting containers of different sizes**

(71) Applicant: CoCo B.V., 9724 AK Groningen (NL)
(72) Inventor: The designation of the inventor has not yet been filed
(74) Representative: Janssen, Paulus J. P.

(57) **Abstract**

The present invention pertains to a trailer, in particular but not necessarily a semi-trailer, having a support frame comprising a first main beam and a second main beam, the main beams being horizontally spaced apart and extending in longitudinal direction between a front end of the frame and a trailing end of the frame, the main beams forming a support area above these beams and a projected area between these beams, the frame further comprising a first connecting member adjacent the front end of the frame, the first connecting member extending from the first main beam to the second main beam for mechanically connecting the main beams near the said front end, and a second connecting member adjacent the trailing end of the frame, the second connecting member extending from the first main beam to the second main beam for mechanically connecting the main beams near the said trailing end of the frame, wherein the second connecting member extends such that it leaves at least a part of the projected area between the main beams unobstructed, the said part extending from the first main beam to the second main beam, and wherein the second connecting member is removably connected to the two main beams. The invention also pertains to a combination comprising the said trailer.

## Description

### FIELD OF THE INVENTION

The present invention pertains to trailers, in particular reconfigurable semi-trailers, suitable for adapting to various kinds of cargo, in particular various kinds of containers.

### BACKGROUND OF THE INVENTION

Trailers for use in road haulage exist in many forms. Common features of all trailers are a support frame (for supporting cargo), the frame being connected to wheeled axles for allowing road haulage of the frame. One of the used types of trailer is a so-called semi-trailer, which is a trailer without a front axle (as opposed to a full trailer having front and trailing end axles). A large proportion of its weight is supported by a road tractor, a detachable front axle assembly known as a dolly, or the tail of another trailer. A semi-trailer is normally equipped with landing gear (legs which can be lowered) to support it when it is uncoupled.

A road tractor coupled to a semi-trailer is often called a semi-trailer truck, simply "semi", or an articulated lorry (in particular in the UK). Various connecting means for connecting the trailer to the tractor are known. Nowadays, the tractor typically comprises a so-called fifth wheel which connects to a semi-trailer Kingpin. Kingpins come in many guises, but a typical market size is the 2.0" (50.8mm) EEC approved type. This Kingpin is fully interchangeable and given strict maintenance is adhered to, it should last the life of a trailer.

In Australian English, the tractor unit is usually referred to as a prime-mover; and the combination of a prime-mover and trailer is known as a semi-trailer or semi. Semi-trailers with two trailer units are B-Doubles or road trains. A B-double consists of a prime mover towing two semi-trailers, where the first semi-trailer is connected to the prime mover by a fifth wheel coupling and the second semi-trailer is connected to the first semi-trailer by a fifth wheel coupling. A road train means a combination, other than a B-Double, consisting of a motor vehicle towing at least two trailers (counting as a single trailer) or a converter dolly supporting at least one semi-trailer.

In road haulage, semi-trailers predominate over full-trailers because of their flexibility. However, semi-trailers have disadvantages, the most predominant ones being that a rigid truck can be used without a trailer, whereas a semi-trailer tractor has no use on its own, a tractor-trailer composition is more likely to jackknife because the semi-trailer weighs significantly more than the tractor and lastly, since a semi-trailer rests on top of a tractor it has a higher centre of gravity which makes it more prone to tipping than a rigid vehicle.

In the European Union, the maximum length for goods vehicles is set by an EC directive and is limited to 16.5 meters for articulated vehicles and 18.75 meters for full-trailer combinations. The directive does not set an absolute weight limit but specifies certain limits which, if met, guarantee free circulation of vehicles within the EU. The harmonised maximum weight for international transport is 40 tonnes. The cargo capacity of combinations for container transport can also be expressed in so-called twenty-feet equivalence units (TEU's) which stands for the equivalent of a standard 20 ft long container.

For domestic transport some countries, even within the EU, permit longer and heavier goods vehicles with more than one articulation, or are at least considering such permission. For example, vehicles weighing up to 60 tonnes and up to 25.25 meters long, which can accommodate three TEU, are allowed in some countries. In the Netherlands, the directorate of the office for road traffic has issued a rule of policy for an exemption on the restrictions allowing such longer and heavier goods vehicles (abbreviated "LHV" or in Dutch "LZV"). However, such exemptions are typically applicable to particular roads only. This complicates the logistics and planning of transportation involving the use of LHV's and limits advantages of the semi-trailer in general and LHV in particular.

### OBJECT OF THE INVENTION

It is an object of the invention to provide a trailer allowing more versatile use and which preferably at least mitigates one or more of the disadvantages of prior art semi-trailers.

### SUMMARY OF THE INVENTION

In order to meet the object of the invention, a trailer has been devised which trailer has a support frame comprising a first main beam and a second main beam, the main beams being horizontally spaced apart and extending in longitudinal direction between a front end of the frame and a trailing end of the frame, the main beams forming a support area above these beams and a projected area between these beams, the frame further comprising a first connecting member adjacent the front end of the frame, the first connecting member extending from the first main beam to the second main beam for mechanically connecting the main beams near the said front end, and a second connecting member adjacent the trailing end of the frame, the second connecting member extending from the first main beam to the second main beam for mechanically connecting the main beams near the said trailing end of the frame, wherein the second connecting member extends such that it leaves at least a part of the projected area between the main beams unobstructed, the said part extending from the first main beam to the second main beam, and wherein the second connecting member is removably connected to the two main beams.

This trailer has several advantages. Firstly, the second connecting member, which near its opposing ends typically is provided with means for receiving and removably connecting projections of containers (these means typically being commonly known twist-lock type connection means) can be removed for accommodating various types of containers. For example, some containers will rest on a goose-neck type or other projection of the trailer near the front end (which is typical for semi-trailers, or full-trailers having for example battery equipment on board) and thus need a projection of the frame above the main beams near the trailing end of the frame. Other types of containers however enclose the goose-neck (or other projection) and are supported in essence directly by the longitudinal main beams of the support frame, in which situation the non-presence of a second connecting member that projects above the supporting surface formed by the beams is an advantage. Next to this, the non-obstructed part of the projection area between the main beams at the trailing end of the frame (e.g. provided by having the second connecting member positioned substantially above the main beams, or by having an adequate cutout in the connecting member) allows the sliding in of an element between the main beams, such as for example a fifth wheel of another frame (for example a sub-frame of the trailer) or frame parts of a second trailer being pulled by the first trailer. Such constitutions have been used in the art but either necessitate a higher placement of the first and second mean beams or necessitate the leaving out of a connection member between the main beams at the trailing edge (which options are both disadvantageous from a stability point of view). In the present set-up, this is no longer necessary.

The invention is also embodied in a combination comprising the trailer as described here-above, wherein a front part of the combination is formed by the said trailer, and a trailing part of the combination is formed by a semi-trailer, wherein the semi-trailer has a support frame comprising a front frame portion that projects into the support frame of the front trailer through the unobstructed part of the projected area between the first and second main beam of the front trailer.

Such a trailer combination can be configured as a long trailer combination as well as a short trailer combination with a length shorter than the length of the long trailer. The length of the combination can thus be adjusted to a large extent, so that for example reconfiguration between an LHV and a vehicle within the constraints of normal commercial vehicles or reconfiguration between a three TEU and a two TEU configuration can be achieved. This allows for even more versatile use of the trailers, for example as an LHV with three TEU until a first point of delivery and then as a more or less conventional vehicle with two TEU load capacity to one or more further points of delivery, without being restricted to roads on which LHV's are allowed. Also, in the configuration where the front frame portion of the second trailer is not projected into the support frame of the front trailer, the second trailer may be pivotably connected to the front trailer, whereas in the configuration wherein the front frame portion does project into the support frame of the front trailer, a rigid connection is provided. This embodiment thus provides many flexible options depending on the load, the local law, the type of roads etc. An advantage of the present combination is that the height of the main beams in the front and rear trailer can be made to be the same since the unobstructed area between the main beams of the front trailer allows that the main beams of both trailers are aligned.

It is noted that the invention in its broadest sense, as well as in all of its embodiments, includes the advantageous option of the trailer, either alone or as a front trailer in any combination, is a semi-trailer.

### DEFINITIONS

*A projected area between two elements*: an area filling the space between elements, which area is a projection of the rectilinear virtual box that encloses the two elements.

*Adjacent*: near, nearby or close, not necessarily adjoining.

*Removably connected*: an operative connection that allows repeated removing and connecting without needing to damage parts, using either no tools or commonly tools for locking and unlocking mechanical connections such as bolt-nut connections, snap-fit connections, luer lock connections or any other connection designed for repeated connection and de-connection.

*Operative connection*: a connection that leads to the parts being connected to operate together as one, without necessarily being mechanically coupled to each other.

*Sliding*: moving over an element while maintaining in essence continuous contact.

### EMBODIMENTS OF THE INVENTION

In a preferred embodiment of the trailer according to the invention the second connecting member extends such that the unobstructed part of the projected area between the main beams covers at least 50% of the said projected area (for example by being positioned about half its height above the main beams), in particular at least 51, 52,53,54,55,56,57,458,59,60,61,62,63,64,65,66,67,68,69,70,71,72,73,74, 75,76,77,78,79,80,81,82,83,84,85,86,87,88,89,90,91,92,93,94,95,96,97, 98, 99%. Even more preferably the second connecting member extends such that the unobstructed part of the projected area between the main beams covers approximately 100% of the said projected area (in this embodiment the beam is extends either above or below the main beams). A larger unobstructed area leaves more room for sliding other elements in between the main beams of the support frame of the trailer and thus, provides a more versatile use of the trailer.

In another embodiment the second connecting member is a connecting beam situated on top of the main beams. This provides the option for a very rigid connecting element and still allowing the projected area between the main beams to be unobstructed for up to 100%.

In yet another embodiment the frame comprises at least one other site, the site being situated between the first connecting member and the trailing end of the frame, for connecting the first and second main beam by removably connecting the second connecting member to the two main beams at this other site. This embodiment is particularly advantageous in those cases where containers are being hauled that need (or are preferred) to be carried at a certain distance above the plane formed by the two main beams. By having the option to connect the second member at various sites along the length of the support frame, various measures of containers (20ft, 30ft, 40ft etc.) can be accommodated to.

In still another embodiment the trailer comprises a means for storing the second connecting member underneath the support area. This embodiment has the advantage that in case containers or other load is directly supported by the main beams of the support frame, the connecting member can be put in a place where it does not interfere with the placement of the container or other load.

In yet another embodiment, in which embodiment the trailer comprises a wheeled sub-frame, the sub-frame having a first sub-frame beam in operative connection with the first main beam and a second sub-frame beam in operative connection with the second main beam, the sub-frame is slidingly movable in longitudinal direction with respect to the support frame, while keeping the said operative connections in place. This embodiment provides for a trailer having an adjustable length, thus able to accommodate an even larger variety of load, in particular a larger variety of containers. In a further embodiment the sub-frame beams are located at least partly along the two main beams, not overlapping the projected area between the two main beams. In the art, when beams have to slide in connection with each other, this is typically provided by having the beams engage in a vertical configuration, this way preventing torsion. However, applicant recognised that by having the beams engage at least partly in a side-by-side configuration, the beams of the sub-frame extending along the outer surfaces of the beams of the main frame, there is left more space between the beams of the sub-frame to accommodate objects such as for example containers. This provides even greater freedom of operation.

In yet a further embodiment, wherein the sub-frame comprises a coupling member for connecting a second trailer, the coupling member is situated at a height such that it overlaps the unobstructed part of the projected area between the first and second main beam. This embodiment has the advantage that the sub-frame can be retracted completely into a main frame having a normal (non-increased) height, despite the vertically extending coupling member being present. In the prior art reconfigurable trailers, in order to provide the same effect, one had to have the support frame of the front (semi-)trailer at an extended height, or alternatively, leave the connecting member in between the first and second main beams out. The latter configuration may lead to torsional forces ultimately disturbing the unhindered sliding of the sub-frame along the main support frame.

In the combination of the invention, the front frame portion of the semi-trailer preferably comprises two front frame portion beams that are slidingly connectable with the respective first and second main beam of the front trailer. In this embodiment, the (rear) semi-trailer is allowed to take various positions with regard to the front trailer, leading to a whole range of possible configurations. In particular, this provides inter alia the configurations as described in EP 2 374 699 in relation to figures 1, 7, 8, 9, 10, 11, 12 and 13, which figures and accompanying description in the paragraphs [0011] to [0063] are enclosed herein by reference. It particular, in this embodiment it is recognised that it is advantageous that the (rear) semi-trailer has support arms projecting laterally of the front frame portion which arms are demountable, retractable, inwardly pivotable, rearwardly slidable or otherwise movable from a support position to a position that they do not interfere with the support frame of the front trailer when front frame portion of the semi-trailer is slided into the support frame of the first trailer.

In a further embodiment of the combination, wherein the support frame of the semi-trailer comprises two longitudinally extending main beams, the main beams being mechanically connected adjacent the front end and trailing end of this support frame, the mechanical connection adjacent the trailing end of the support frame of the semi-trailer is provided by a further connecting member that is removably connected to the said main beams of the semi-trailer. By allowing the same versatile connection between the main beams of the second trailer as well, corresponding advantages can be obtained for the second trailer. This improves the overall flexibility of the combination. Preferably, the (rear) semi-trailer has means for storing the second connecting member of the front trailer and the further connecting member of the semi-trailer underneath a support area of the support frame of the semi-trailer. This way, even in the combined constitution of two trailers, the removed connecting members can be positioned such that do not interfere with the cooperating frame parts.

In yet another combination, in which combination the front trailer comprises a wheeled sub-frame, the sub-frame having a first sub-frame beam in operative connection with the first main beam and a second sub-frame beam in operative connection with the second main beam, wherein the sub-frame is slidingly movable in longitudinal direction with respect to the support frame of the first trailer, while keeping the said operative connections in place, the wheeled sub-frame is slidable with respect to the semi-trailer to be positioned at various positions substantially completely underneath the support frame of the semi-trailer. This leaves the option of the road hauler to place the wheels at various locations of the combination, depending on the type of load, and type of combination (rigid, pivotable, LHV, road train etc.). Also, the option of having wheels that can be slided underneath the second (rear) trailer provides the option of having less wheels (axles) underneath the second trailer which is advantageous from an economical point of view.

In a further embodiment wherein the semi-trailer has a semi-trailer support frame comprising a first semi-trailer main beam and a second semi-trailer main beam, the main beams being horizontally spaced apart and extending in longitudinal direction between a front end of the semi-trailer support frame and a trailing end of the semi-trailer support frame, and wherein the semi-trailer has a support leg adjacent its front end to support the semi-trailer to maintain a relative position above a ground surface when the semi-trailer is not coupled to the front trailer, **characterised in that** the support leg is situated between the first semi-trailer main beam and the second semi-trailer main beam and is movable between a first position in which the leg extends substantially in vertical direction to enable the support of the front end of the semi-trailer to maintain a relative position above a ground surface and a second position in which the leg extends substantially in horizontal direction. It was applicant's recognition that it is not favourable in the combination according to the invention to have the necessary support function to maintain a relative position above a ground surface when the semi-trailer is not coupled to the front trailer, at one or more sites around the boundary of the front of the semi-trailer. In order to keep the semi-trailer as lows as possible, much of the space available is needed for the wheeled axles and corresponding parts. By placing the support leg between the two main beams of the semi-trailer, while at the same time making sure that the leg can be moved away, preferably pivoted away, to take a horizontal position, preferably between the main beams, the sub-frame of the front trailer can still be allowed to freely pass underneath the rear semi-trailer.

The invention will now be explained based on the following examples.

### BRIEF DESCRIPTION OF THE FIGURES

Figure 1 is a schematic view of the essential parts of a trailer.
Figure 2 is a schematic view of parts of an alternative embodiment of a trailer.
Figure 3 is a schematic view of parts of a trailer according to the invention which parts correspond to the parts depicted in figure 2.
Figure 4 is a detailed view of the rear portion of the constitution of parts shown in figure 3.
Figure 5 is a schematic view of a cross-section of a trailing part of another trailer according to the invention.
Figure 6 is a schematic side view of the trailer as shown in figure 5.
Figure 7 is a schematic view of a semi-trailer for use in a combination according to the invention.
Figure 8 is a schematic side view of a combination according to the invention.
Figure 9 is a schematic side view of another combination according to the invention.

### Figure 1

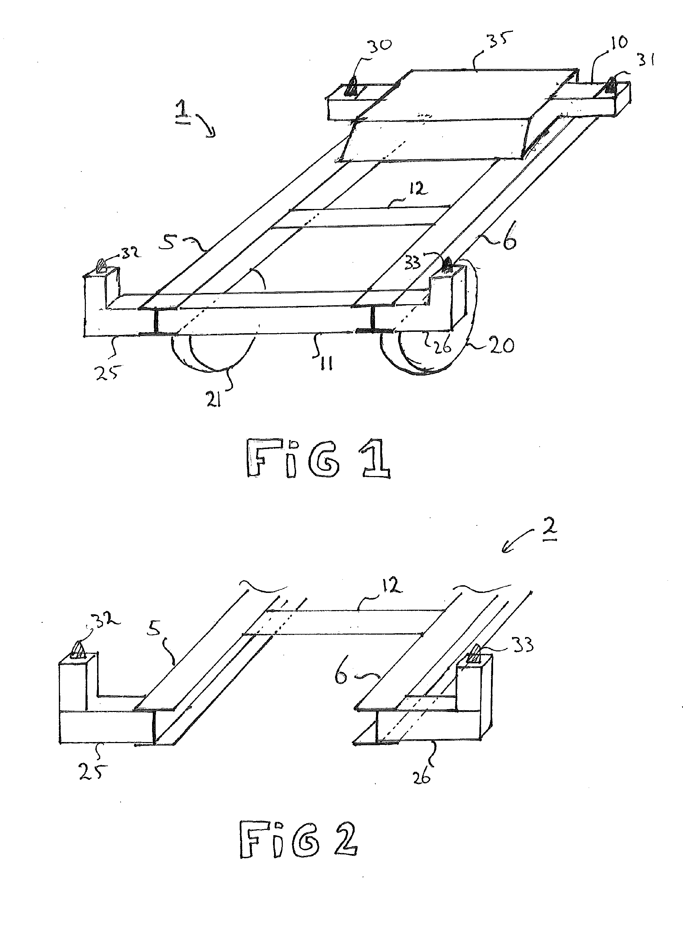

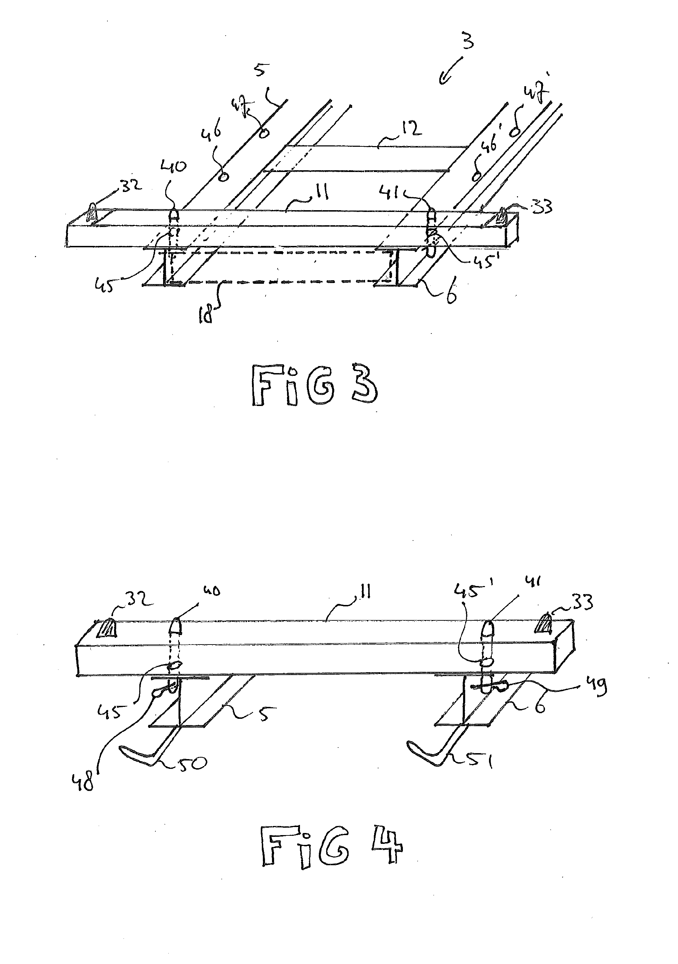

Figure 1 is a schematic view of the essential parts of a trailer 1. This trailer 1 has a support frame comprising a first H-shaped main beam 5 and a second H-shaped main beam 6, the main beams being horizontally spaced apart and extending in longitudinal direction between a front end of the frame, the front end carrying goose neck element 35, and a trailing end of the frame, being supported by wheels 20 and 21. The main beams form a support area above these beams and a projected area 18 between these beams (see figure 3). The frame further comprises a first connecting member 10 adjacent the front end of the frame , this first connecting member extending in a direction perpendicular to the main beams 5 and 6, from the first main beam 5 to the second main beam 6 for mechanically connecting the main beams near the said front end. Also, at the ends of this connecting member 10, the trailer is provided with twist lock couplings 30 and 31 to receive and connect a container. The trailer is provided with a second connecting member 11 adjacent the trailing end of the frame, this second connecting member extending also from the first main beam to the second main beam for mechanically connecting the main beams near the said trailing end of the frame. Adjacent this member 11, the frame is provided with extensions 25 and 26 for carrying twist lock couplings 32 and 33 respectively. The height of these latter twist lock couplings 32 and 33 is brought to the same height as couplings 30 and 31. Second connecting member 11 is situated at the projected area 18 between the beams, leaving this area completely obstructed. This prior art constitution provides for a very rigid frame. In the middle section of the frame a third connecting member 12 is provided.

### Figure 2

Figure 2 is a schematic view of parts of an alternative embodiment of a trailer 2. This figure is a more detailed view of the rear part of a frame of a prior art trailer 2 in which parts corresponding to parts of the trailer as shown in figure 1 are numbered equally. In this trailer there is no connection member between the main beams 5 and 6 adjacent the trailing end of the support frame. This leads to torsional forces on the beams 5 and 6 when a container or other load is carrying by extensions 25 and 26. On its turn this may lead to distortion of the shape of the main beams.

### Figure 3

Figure 3 is a schematic view of parts of a trailer 3 according to the invention in which figure parts that correspond to parts of the trailers as shown in figure 1 and 2 are numbered equally. For this trailer, the second connecting member 11 extends in horizontal direction at a height (in this case above the beams 5 and 6) such that it leaves the complete projected area 18 between the main beams 5 and 6 unobstructed. Also this connecting member is removably connected to the two main beams 5 and 6 using pins 40 and 41 passing through holes 45 and 45' of the beams 5 and 6 respectively. This way, by removing the pins 40 and 41 the connecting member 11 can be removed from the beams and for example placed at other sites of the beams corresponding to holes 46 (and 46') or 47 (and 47') respectively. If the type of load does not need the height of the twist lock couplings 32 and 33, for example when a container or other load can be carried directly on the surface of the beams, the connecting member 11 can be removed and stored on bars 50 and 51 (see figure 4). In such a configuration, either the other connecting members provide sufficient horizontal connection between the main beams 5 and 6 or a provision is being taken that the load itself provides for an additional mechanical coupling between the beams.

### Figure 4

Figure 4 is a detailed view of the rear portion of the constitution of parts shown in figure 3, and clearly shows the bars 50 and 51 for carrying the second connecting member when not in use for connecting the main beams 5 and 6. Also, locking springs 48 and 49 are shown for the pins 40 and 41.

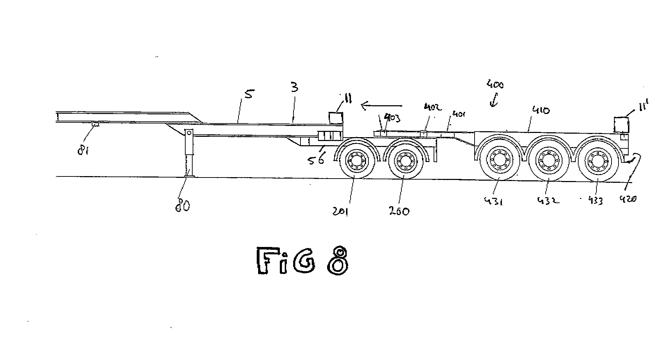

Not shown in figure 4 are wheels that unfold (pop-out; hydraulically) between the connecting member 11 and beams 5 and 6 when the member 11 is unlocked from its connecting position. These wheels provide for an easy transport over the beams to another connection site, or even to the main beams of a second trailer (such as indicated in the description in connection with figure 8: the rigid combination). With such wheels present, it is possible for one man to relocate the connecting member throughout the complete area of the trailer or combination of trailers.

In an embodiment of the trailer according to the invention, beam 10' (not shown in figure 4; at the position of beam 10 as shown in figure 1), is also provided in the form of a removable beam and is lain on top of goose-neck 35, fits around it (U-shaped) and has horizontally extending arms to serve as support arm for carrying cargo such as a container. In this embodiment the beam 10 does not provide a mechanical connection at the front edge between the main beams. For this, a connecting member needs to be present in addition to removably connected beam 10. The advantage of this embodiment is that also at the front end, the position of the support arms can be adapted to the dimensions of the cargo, in particular the length of the containers. Typically, each trailer has one or two of such removably connected beams 10 at the front end, and one or two removably connected beams at its trailing end.

### Figure 5

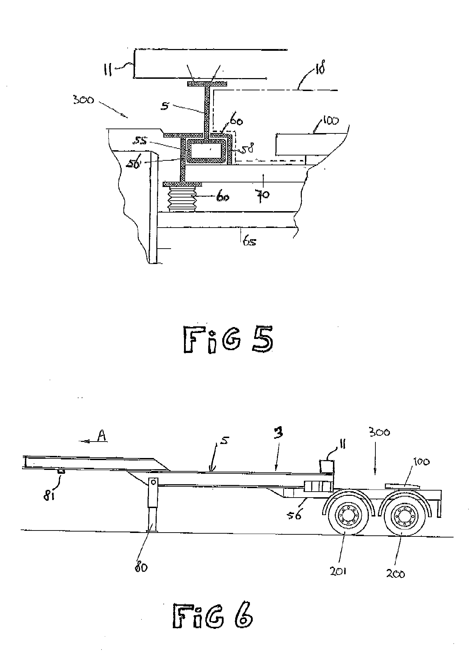

Figure 5 is a schematic view of a cross-section of a trailing part of another trailer 3 (not indicated as such) according to the invention. It is noted that only one side (the left side) of the cross-section of the trailer 3 has been shown, the other side (the right side) being a mirror image of the shown side. In this embodiment the trailer 3 has a wheeled sub-frame 300 (see figure 6), the sub-frame having a first sub-frame beam 56 (an H-shaped beam) in operative connection with the first main beam 5 and a second sub-frame beam (not indicated in figure 5) in operative connection with the second main beam 6, wherein the sub-frame is slidingly movable in longitudinal direction with respect to the support frame, while keeping the said operative connections between the sub-frame beams and the main beams of the in place.

As indicated in figure 5, in this embodiment the main beams (of which only beam 5 is shown) have a box portion 55, around which box portion a box portion of beam 56 slidingly fits, this latter box portion having horizontal (60) and vertical (58) parts. Frame part 70 closes the mechanical loop between parts 58, 60 and the remainder of the sub-frame beam. This sub-frame beam is connected to axle 65 via suspension 60. On the frame part 70 part of the fifth wheel 100 is depicted in figure 5. Right above the fifth wheel, via dotted lines the projected area 18 between the main beams 5 and 6 is shown, which in this embodiment is completely unobstructed by the removably fitted second connecting member 11.

### Figure 6

Figure 6 is a schematic side view of the trailer 3 as shown in figure 5. The main beam 5 extends between a support leg 80 and the removably second connecting member 11. The front part of the trailer r is provided with a front coupling 81 of the kingpin plate type for operative connection to a truck. The direction of movement is indicated by arrow A. Also shown in this side-view is sub-frame beam 56 and fifth wheel 100, as well as wheels 201 and 200. By sliding the wheeled sub-frame 300 in the direction A, while keeping the main support (i.e. beam 5) stationary, the wheeled sub-frame is able to pass underneath beam 5. Since the projected area between the main beams 5 and 6 is unobstructed as shown in figure 5, fifth wheel 100 may freely project into the space between the main beams 5 and 6.

### Figure 7

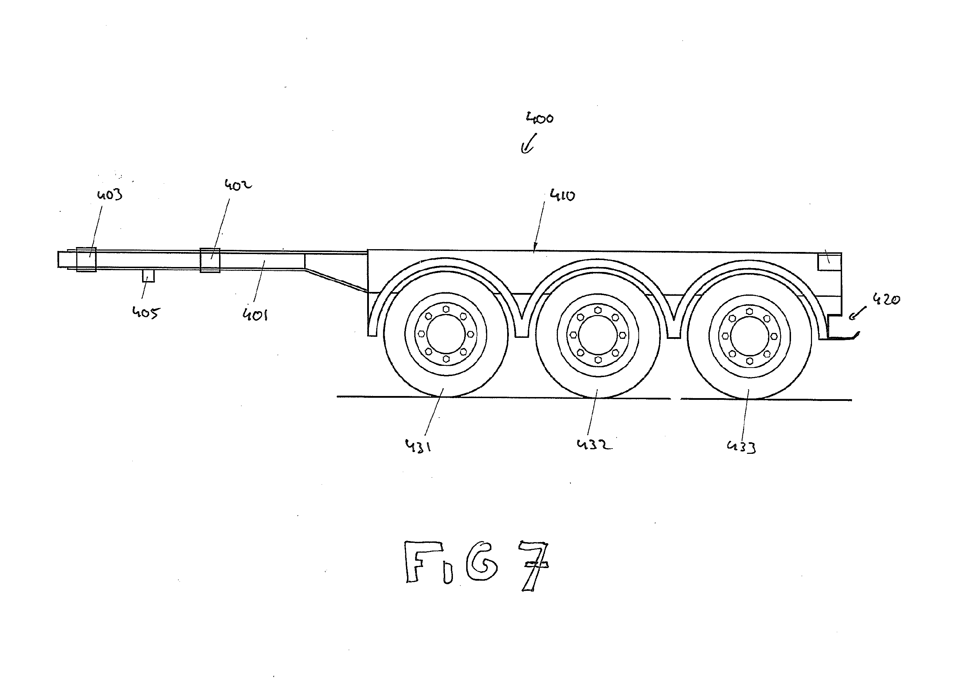

Figure 7 is a schematic view of a semi-trailer 400 for use in a combination according to the invention. This semi-trailer has a main frame 410 (consisting of two longitudinally extending, horizontally connected main beams; not individually shown in figure 7 but corresponding to a construction of trailer 1 as indicated in figure 1) and three axles (not shown as such in figure 7) carrying wheels 431, 432 and 433 respectively. A front-frame portion 401 of this semi-trailer 400 extends forwardly of the first wheel axle (carrying wheel 431) and the main frame 410 in a direction of movement (see figure 6). The front frame portion 401 has a front frame coupling member 405 complementary with the fifth wheel coupling member 100 of the wheeled sub-frame 300. The semi-trailer further comprises support arms 402 and 403 that extend in a width direction (perpendicular to the direction of movement as indicated in figure 6), meant to support load such as a container. The semi-trailer also comprises a space for storing the second connecting member of the front trailer, as well as the second connecting member of the semi-trailer (not shown, but corresponds for this semi-trailer to the connecting member as shown in figure 3) underneath the support area (i.e. the area right above main frame 410).The front frame portion 401 which consist of two horizontally spaced apart main beams (one of which is shown in figure 7 and is indicated with numeral 401) can be guided to be slided into the projected area between the main beams 5 and 6 of the front (semi-) trailer when connected to the fifth wheel of the sub-frame 300. This way, the rear semi-trailer can take a position between a first ultimate position in which the semi-trailer is completely extended rearwardly (see figure 8), and a second ultimate position in which the rear semi-trailer is completely (at least as far as the movement of the sub-frame chasses 300 allows) projected into the area between main beams 5 and 6 (in correspondence with for example figure 7 of EP 2 374 699). Preferably, the coupling member 405 is of the same type as member 81 of the front trailer so that this semi-trailer can also be coupled to the same truck.

### Figure 8

Figure 8 is a schematic side view of a combination according to the invention. This side view shows the rear semi-trailer 400 coupled to the front semi-trailer 3 as described in conjunction with figure 7. The constitution shown is the extended constitution in which the rear semi-trailer can pivot with respect to the first semi-trailer. When the sub-frame 300 would be completely slided underneath the main support of the front semi-trailer, the front-frame portion 401 would be in slidable connection with beams 5 and 6 of the main support frame, resulting in a rigid combination. Semi-trailer 400 in this combination is provided with a connecting member 11' to provide for a horizontally even support plane together with member 11 and the goose-neck of trailer 3. In an alternative constitution, both connecting member s 11 and 11' are removed and both stored in means 420 of the rear semi-trailer 400.

### Figure 9

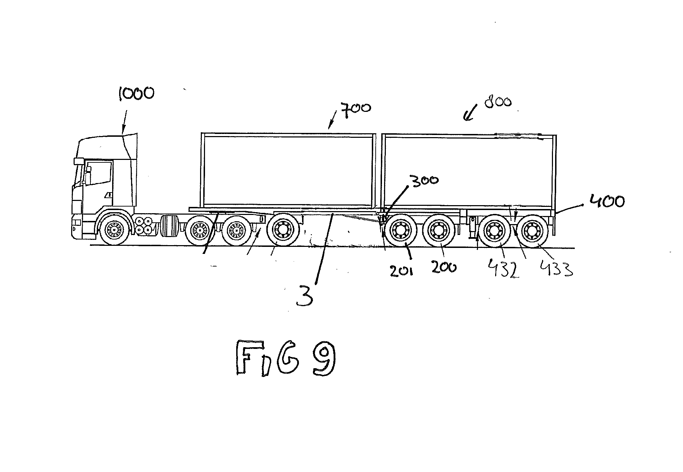

Figure 9 is a schematic side view of another combination according to the invention. In this combination is shown a truck 1000 towing a front semi-trailer 3 (with wheels carrying a first container 700, and a second semi-trailer 400 carrying a container 800. The wheeled sub-frame 300, having wheels 201 and 200, in this constitution is slided underneath frame 400, having wheels 432 and 433) to provide extra wheels underneath the rear semi-trailer. This is advantageous when the rear semi-trailer is loaded very heavy.

## Claims

1. A trailer (3) having a support frame comprising a first main beam (5) and a second main beam (6), the main beams (5,6) being horizontally spaced apart and extending in longitudinal direction between a front end of the frame and a trailing end of the frame, the main beams (5,6) forming a support area above these beams and a projected area (18) between these beams, the frame further comprising a first connecting member (10) adjacent the front end of the frame, the first connecting member (10) extending from the first main beam (5) to the second main beam (6) for mechanically connecting the main beams (5,6) near the said front end, and a second connecting member (11) adjacent the trailing end of the frame, the second connecting member (11) extending from the first main beam (5) to the second main beam (6) for mechanically connecting the main beams (5,6) near the said trailing end of the frame, wherein the second connecting member (11) extends such that it leaves at least a part of the projected area (18) between the main beams (5,6) unobstructed, the said part extending from the first main beam (5) to the second main beam (6), and wherein the second connecting member (11) is removably connected to the two main beams (5,6).

2. A trailer (3) according to claim 1, **characterised in that** the second connecting member (11) extends such that the unobstructed part of the projected area (18) between the main beams (5,6) covers at least 50% of the said projected area (18).

3. A trailer (3) according to claim 1 or 2, **characterised in that** the second connecting member (11) extends such that the unobstructed part of the projected area between the main beams (5,6) covers approximately 100% of the said projected area (18).

4. A trailer (3) according to any of the preceding claims, **characterised in that** the second connecting member(11) is a connecting beam situated on top of the main beams (5,6).

5. A trailer (3) according to any of the preceding claims, **characterised in that** the frame comprises at least one other site (46, 47), the site being situated between the first connecting member (10) and the trailing end of the frame, for connecting the first and second main beam by removably connecting the second connecting member (11) to the two main beams (5,6) at this other site.

6. A trailer (3) according to any of the preceding claims, **characterised in that** the trailer comprises a means (50,51) for storing the second connecting member underneath the support area.

7. A trailer (3) according to any of the preceding claims, wherein the trailer (3) comprises a wheeled sub-frame (300), the sub-frame (300) having a first sub-frame beam (56) in operative connection with the first main beam (5) and a second sub-frame beam in operative connection with the second main beam (6), **characterised in that** the sub-frame (300) is slidingly movable in longitudinal direction with respect to the support frame, while keeping the said operative connections in place.

8. A trailer (3) according to claim 7, **characterised in that** the sub-frame beams (56) are located at least partly along the two main beams (5,6), not overlapping the projected area (18) between the two main beams (5,6).

9. A trailer (3) according to any of the claims 7 and 8, wherein the sub-frame (300) comprises a coupling member (100) for connecting a second trailer (400), **characterised in that** the coupling member (100) is situated at a height such that it overlaps the unobstructed part of the projected area (18) between the first and second main beam (5,6).

10. A combination comprising the trailer (3) according to any of the claims 1 to 9, wherein a front part of the combination is formed by the said trailer (3), and a trailing part of the combination is formed by a semi-trailer (400), **characterised in that** the semi-trailer (400) has a support frame (410) comprising a front frame portion (401) that is projectable into the support frame of the front trailer (3) through the unobstructed part of the projected area (18) between the first and second main beam (5,6) of the front trailer (3).

11. A combination according to claim 10, **characterised in that** the front frame portion (401) of the semi-trailer (400) comprises two front frame portion beams that are slidingly connectable with the respective first and second main beam (5,6) of the front trailer (3).

12. A combination according to claims 10 or 11, wherein the support frame (410) of the semi-trailer (400) comprises two longitudinally extending main beams, the main beams being mechanically connected adjacent the front end and trailing end of this support frame (410), **characterised in that** the mechanical connection adjacent the trailing end of the support frame of the semi-trailer (400) is provided by a further connecting member (11') that is removably connected to the said main beams of the semi-trailer (400).

13. A combination according to claim 12, **characterised in that** the semi-trailer (400) has means (420) for storing the second connecting member (11) of the front trailer (3) and the further connecting member (11') of the semi-trailer (400) underneath a support area of the support frame (410) of the semi-trailer (400).

14. A combination according to any of the claims 10 to 13, wherein the front trailer (3) comprises a wheeled sub-frame (300), the sub-frame (300) having a first sub-frame beam (56) in operative connection with the first main beam (5) and a second sub-frame beam in operative connection with the second main beam (6), wherein the sub-frame (300) is slidingly movable in longitudinal direction with respect to the support frame of the front trailer (3), while keeping the said operative connections in place, **characterised in that** the wheeled sub-frame (300) is slidable with respect to the semi-trailer (400) to be positioned at various positions substantially completely underneath the support frame (410) of the semi-trailer (400).

15. A combination according to claim 14, wherein the semi-trailer(400) has a semi-trailer support frame (410) comprising a first semi-trailer main beam and a second semi-trailer main beam, the main beams being horizontally spaced apart and extending in longitudinal direction between a front end of the semi-trailer support frame (410) and a trailing end of the semi-trailer support frame (410), and wherein the semi-trailer (400) has a support leg adjacent its front end to support the semi-trailer to maintain a relative position above a ground surface when the semi-trailer is not coupled to the front trailer, **characterised in that** the support leg is situated between the first semi-trailer main beam and the second semi-trailer main beam and is movable between a first position in which the leg extends substantially in vertical direction to enable the support of the front end of the semi-trailer to maintain a relative position above a ground surface and a second position in which the leg extends substantially in horizontal direction.
